# EUROPÄISCHE PATENTSCHRIFT

(11) **EP 1 238 577 B1**
(45) Veröffentlichungstag und Bekanntmachung des Hinweises auf die Patenterteilung: **21.06.2006**
(21) Anmeldenummer: 02004793.2
(22) Anmeldetag: 02.03.2002
(51) Int. Cl.: A01B 59/06

(54) **Vorrichtung zum Koppeln eines Gerätes an ein Arbeitsfahrzeug**
Device for coupling an implement to a vehicle
Dispositif pour coupler un appareil à un véhicule

(30) Priorität: 10.03.2001 DE 10111529
(43) Veröffentlichungstag der Anmeldung: 11.09.2002
(73) Patentinhaber: DEERE & COMPANY, Moline, Illinois 61265-8098 (US)
(72) Erfinder: Bernhardt, Gerd, Prof. Dr. Ing. habil, 01728 Hänichen (DE); Fedotov, Sergiy, 01069 Dresden (DE); Rudik, Ruslan, 01069 Dresden (DE); Weiss, Heinz, 64625 Bensheim (DE)
(74) Vertreter: Lau-Loskill, Philipp

(56) Entgegenhaltungen:
- DE-A- 19 913 911
- US-A- 3 432 184
- US-A- 5 455 557

## Beschreibung

Die Erfindung betrifft eine Vorrichtung zum Koppeln eines Gerätes an ein Arbeitsfahrzeug, insbesondere einem landwirtschaftlichen oder industriellen Fahrzeug, mit einer Geräteschnittstelle, die fahrzeugseitige Koppelelemente und korrespondierende geräteseitige Koppelelemente aufweist. Um die räumlichen Lagen der fahrzeugseitigen Koppelelemente relativ zum Fahrzeug einstellen zu können, sind hierfür geeignete Einstellmittel vorgesehen.

Es sind unterschiedliche Anbauschnittstellen, auch Gerätekopplungsvorrichtungen genannt, bekannt, durch die beispielsweise landwirtschaftliche Anbaugeräte an ein landwirtschaftlichen Fahrzeug, wie Ackerschlepper oder Erntemaschine, befestigbar sind. Dabei sind die fahrzeugseitigen Koppelelemente häufig nicht starr mit dem Fahrzeug verbunden sondern lassen sich relativ zum Fahrzeug bewegen, so dass sich auch das Anbaugerät relativ zum Fahrzeug bewegen lässt. Als Koppelelemente sind eine Vielzahl von Befestigungsmöglichkeiten bekannt, beispielsweise als Haken ausgebildete Kopplungspunkte oder Kopplungsplatten mit flächenartigen Kopplungsbereichen.

Die US-A-3,432,184 beschreibt eine Anbauvorrichtung für einen Traktor mit einer dreieckförmigen Koppelplatte, die über mehrere hydraulische und elektrische Aktuatoren mit dem Traktorrahmen in Verbindung steht und sich durch Betätigung der Aktuatoren relativ zum Fahrzeugrahmen innerhalb eines vorgegebenen Bewegungsraums translatorisch und rotatorisch bewegen lässt. Das Anbaugerät enthält ebenfalls eine dreieckförmige Anbauplatte, deren obere Kanten flanschartig umgebogen sind, so dass sie die entsprechenden Kanten der Koppelplatte aufnehmen können. Die bekannte Anbauvorrichtung soll eine einfache und schnelle Aufnahme von Anbaugeräten von der Fahrzeugkabine aus ermöglichen, ohne dass zuvor eine genaue Ausrichtung des Traktors zum Anbaugerät erfolgen muss. Zu diesem Zweck lassen sich die Aktuatoren von einer Bedienungskonsole in der Fahrzeugkabine aus ansteuern. Zum Ankoppeln wird zunächst die Koppelplatte abgesenkt, dann wird das Fahrzeug bewegt, um die Koppelplatte in die Nähe der Anbauplatte zu bringen, und schließlich werden bei stehendem Fahrzeug die Aktuatoren betätigt, um die beiden Platten zueinander auszurichten und gegebenenfalls miteinander zu verriegeln. Das Koppeln ist jedoch häufig schwierig, da die Bedienungsperson von der Fahrerkabine aus die Koppelstelle schlecht einsehen und die Abstände zwischen der Koppelplatte und der Anbauplatte schlecht abschätzen kann. Es ist viel Fingerspitzengefühl erforderlich, um den Koppelvorgang zuverlässig auszuführen. Dies erfordert Geduld und Zeit.

Um den Koppelvorgang zwischen Fahrzeug und einer Anhängerkupplung vom Fahrerplatz aus besser beobachten zu können, wurde durch die US-A-6,076,847 vorgeschlagen, auf der Anhängerdeichsel einen schräggestellten Spiegel derart über der Anhängekupplung zu montieren, dass die Bedienungsperson mit Hilfe des Spiegels die Anhängerkupplung von oben beobachten kann. Selbst mit diesem Hilfsmittel ist der Manövriervorgang beim Kuppeln schwierig.

Die der Erfindung zugrunde liegende Aufgabe wird darin gesehen, eine Koppelvorrichtung der eingangs genannten Art anzugeben, durch welche die vorgenannten Probleme überwunden werden. Insbesondere soll die Bedienungsperson entlastet und der Koppelvorgang erleichtert und beschleunigt werden, was zu Zeit-und Kraftstoffeinsparungen führt.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Die erfindungsgemäße Koppelvorrichtung enthält eine Geräteschnittstelle, die fahrzeugseitige Koppelelemente und korrespondierende geräteseitige Koppelelemente aufweist. Durch Einstellmittel lässt sich die räumliche Lage der fahrzeugseitigen Koppelelemente relativ zum Arbeitsfahrzeug einstellen. Die Erfindung schlägt die Verwendung wenigstens einer Sensoreinrichtung vor, welche die Lage der geräteseitigen Koppelelemente erkennt bzw. erfasst. Eine Auswerteeinrichtung ermittelt die relative Lage der geräteseitigen Koppelelemente zu den fahrzeugseitigen Koppelelementen. Eine Steuereinrichtung berechnet eine Bewegungsbahn für den Kopplungsvorgang und steuert aufgrund eines Startsignals die Einstellmittel derart an, dass der Kopplungsvorgang entlang der berechneten Bewegungsbahn vollautomatisch ausgeführt wird.

Um eine Gerätekopplung vorzunehmen, wird die Arbeitsmaschine zunächst in die Nähe des Anbaugerätes gefahren. Bei der Annäherung des Arbeitsfahrzeuges zum Gerät wird durch eine Sensoreinrichtung und eine Auswerteeinrichtung die Lage der geräteseitigen Koppelelemente relativ zu einem vorgegebenen Punkt an der Arbeitsmaschine bzw. zu der Lage der geräteseitigen Koppelelementen ständig oder periodisch innerhalb vorgebarer Zeitintervalle erfasst. Dabei werden aus den durch die Sensoreinrichtung gewonnenen Messwerten die zugehörigen Koordinaten der geräteseitigen Koppelelemente berechnet und es wird laufend geprüft, ob sich die geräteseitigen Koppelelemente im Bewegungsbereich (Arbeitsraum) der fahrzeugseitigen Kopplungselemente befinden. Da sich die fahrzeugseitigen Koppelelemente durch die Einstellmittel innerhalb eines relativ großen Bewegungsbereichs einstellen lassen, hat der Fahrer zur Ausrichtung des Arbeitsfahrzeugs relativ zum Anbaugerät einen großen Spielraum und kann das Fahrzeug rasch an das Anbaugerät annähern.

Wenn das Fahrzeug in eine Lage gefahren wurde, in der sich die geräteseitigen Koppelelemente im Arbeitsraum befinden, wird durch die Auswerteeinrichtung eine geeignete Information, beispielsweise in Form eines akustischen oder optischen Signals, an die Bedienungsperson abgegeben. Die Bedienungsperson bringt nun das Arbeitsfahrzeug zum stehen und prüft, ob der Kopplungsbereich hindernisfrei ist und eine gefahrlose automatische Kopplung erfolgen kann. Ist dies der Fall, so aktiviert die Bedienungsperson, beispielsweise durch Betätigung eines Druckknopfschalters, den automatischen Koppelvorgang. Die Steuereinrichtung berechnet aus der aktuellen relativen Lage zwischen den fahrzeugseitigen und den geräteseitigen Koppelelementen eine Bewegungsbahn für den Koppelvorgang und steuert die Einstellmittel an, um die fahrzeugseitigen Koppelelemente automatisch entlang der berechneten Bewegungsbahn an die geräteseitigen Koppelelemente anzunähern. Bei der Berechnung der Bewegungsbahn wird die Lage der geräteseitigen Koppelpunkte als Ziel-Lage verwendet, die sich bei stehendem Arbeitsfahrzeug und Gerät nicht verändert. Die jeweilige Ist-Lage der fahrzeugseitigen Koppelpunkte wird durch eine geeignete mit den Einstellmitteln zusammenwirkende Sensorik erkannt bzw. erfasst.

Die erfindungsgemäße Koppelvorrichtung erlaubt einen weitgehend automatisierten Koppelvorgang zwischen Arbeitsfahrzeug und Anbaugerät, der keine besonderen Anforderungen an die Geschicklichkeit und Erfahrung der Bedienungsperson stellt. Durch die Bereitstellung eines automatischen Kuppelvorgangs wird die Bedienungsperson entlastet und kann ihre Aufmerksamkeit voll auf Sicherheitsaspekte richten, beispielsweise darauf, ob Personen durch den Koppelvorgang gefährdet werden oder ob sich Hindernisse im Koppelbereich befinden. Der Koppelvorgang kann zügig durchgeführt werden, weil er automatisch abläuft und nicht von der Geschicklichkeit der Bedienungsperson abhängt. Dies führt zu Zeit- und Kraftstoffeinsparungen.

Vorzugsweise sind die fahrzeugseitigen Koppelelemente auf einem Kopplungsrahmen angeordnet, der durch längenveränderliche Einstellmittel mit dem Fahrzeug in Verbindung steht. Als Einstellmittel kommen beispielsweise ein- oder doppelseitig wirkende Hydraulikzylinder in Betracht. Es können jedoch auch andere hydraulische oder elektromechanische Stellelemente verwendet werden. Der Koppelrahmen kann vielfältig ausgebildet sein. Beispielsweise ist er eine im wesentlichen dreieckförmige Platte, die als Einphasenkuppler ausgebildet ist und an deren Eckpunkten die Einstellmittel angreifen, wie es aus der US-A-3,432,184 hervorgeht. Der Koppelrahmen kann auch die Form eines gleichschenkligen oder gleichseitigen Dreieckrahmens haben, an dessen Eckpunkten einerseits die Einstellmittel gelenkig angreifen und andererseits Kopplungselemente in Form von Haken und dergleichen befestigt sind, wie es aus der nachveröffentlichten DE-A-199 51 840 hervorgeht. Es kann sich bei dem Koppelrahmen auch um einen Portalrahmen handeln mit einem oberen Horizontalbalken und zwei seitlichen Vertikalbalken (US-A-5,092,409).

Eine besonders bevorzugte Ausgestaltung der Erfindung sieht vor, dass die Koppelvorrichtung wenigstens sechs längenverstellbare Einstellmittel enthält, deren jeweils erstes Ende gelenkig mit dem Fahrzeug verbunden ist und deren jeweils zweites Ende gelenkig mit einem Kopplungsrahmen, auf dem die Kopplungselemente angeordnet sind, in Verbindung steht. Die Einstellmittel sind dabei in geschlossenen kinematischen Ketten angeordnet und ermöglichen die Bewegung des Kopplungsrahmens in sechs Freiheitsgraden. Eine derartige Anordnung der Einstellmittel geht aus der nachveröffentlichten DE-A-199 51 840 hervor, auf deren Offenbarung hiermit Bezug genommen wird. Durch diese Anordnung lassen sich die Koppelelemente oder Koppelpunkte innerhalb weiter Grenzen innerhalb eines großen Arbeitsraumes in sechs Freiheitsgraden beliebig bewegen und einstellen. Dies begünstigt es, dass schon bei grober Positionierung des Arbeitsfahrzeugs eine automatische Kopplung erfolgen kann.

Vorzugsweise sind die Einstellmittel nach Art eines Hexapoden angeordnet. Eine Hexapod-Anordnung wird beispielsweise in der nachveröffentlichten DE-A-199 51 840 beschrieben. Die Einstellmittel sind mit Wegsensoren ausgestattet, aus deren Messwerten sich die jeweilige räumlichen Ist-Lage des Kopplungsrahmens und damit auch die Ist-Lagen der Koppelelemente oder Kopplungspunkte bestimmen lassen. Hierbei können bekannte Berechnungsmethoden angewendet werden (Hebsacker, M.: Die Auslegung der Kinematik des Hexaglide - Methodik für die Auslegung paralleler Werkzeugmaschinen, VDI Berichte Nr. 1427, 1998).

Gemäß einer vorteilhaften Weiterbildung der Erfindung sind Sensoren zur Längenmessung der längenverstellbaren Einstellmittel vorgesehen. Aus den Messwerten der Sensoren lassen sich die Koordinaten der Koppelpunkte des Hexapod-Anbaus berechnen. Die Sensoren können beispielsweise in die Hydraulikzylinder einer Hexapod-Anordnung integriert sein.

Als Sensoreinrichtung für die Erkennung der räumlichen Lage der geräteseitigen Koppelpunkte kommen eine Reihe bekannter Verfahren in Betracht, die bisher für andere Anwendungszwecke verwendet wurden.

Ein geeignetes Verfahren für die Positionserkennung bedient sich der Bildverarbeitung, durch welche die Signale einer oder mehrerer Kameras ausgewertet werden. Beispielsweise werden zwei Kameras seitlich nebeneinander in den Eckpunkten des Fahrzeugkabinendachs montiert und auf die geräteseitige Kopplungsstruktur ausgerichtet. Die Kameras nehmen die Kopplungsstruktur in fester geometrischer Anordnung auf und erkennen charakteristische Merkmale der zu messenden Kopplungsstruktur. Sie übertragen die digitalen Bilder zu einem Steuergerät, in dem die Bilder mit entsprechender Software verarbeitet werden, um die Koordinaten der geräteseitigen Koppelelemente oder Kopplungspunkte zu berechnen.

Bei der Auswertung werden Bildverarbeitungsmethoden verwendet, wie sie bei der Automatisierung in der industriellen Fertigungstechnik für die Lageerkennung eines Werkstückes im Raum eingesetzt werden. Nach einer bekannten Methode werden zuerst charakteristische, optisch hervortretende Bereiche, beispielsweise Ecken oder Bohrungen, eines Werkstücks ermittelt, die anschließend mit Hilfe einer Relaxation den entsprechenden charakteristischen Bereichen eines bekannten Prototypen zugeordnet werden. Über die Zuordnung kann dann die Lage des gesamten Werkstücks ermittelt werden.

Vorzugsweise werden durch die beiden Kameras auch Teile der Einstellmittel, insbesondere des Hexapods, aufgenommen, so dass bei der Verarbeitung der Bilder die Koordinaten der geräteseitigen Kopplungspunkte relativ zum Hexapodanbau ermittelt werden. Dies erlaubt die Korrektur von Fehlern, die durch Montagetoleranzen bei der Befestigung der beiden Kameras oder durch geringfügige Verschiebungen der Kameras infolge des Fahrzeugbetriebs verursacht werden.

In Abhängigkeit von der verwendeten Bildverarbeitungssoftware werden Schwarzweiß- oder Farbkameras eingesetzt. Die Bildverarbeitungsmethode hat den Vorteil, dass selbst dann, wenn bei der Vermessung ein charakteristisches Merkmal ganz oder teilweise ausfällt (z.B. wenn dieses Merkmal durch Bauteile verdeckt wird), sich die Lage der Kopplungspunkte noch eindeutig bestimmen lässt. Eine entsprechende Software für den Roboter-Einsatz wird durch die Fa. ISRA Vision Systems AG, Darmstadt, DE angeboten.

Bei einer weiteren Sensoreinrichtung für die Erkennung der räumlichen Orientierung und Position der geräteseitigen Koppelpunkte werden sogenannte "3D magnetische Sensoren" verwendet. Hierbei wird von einem auf dem Gerät befestigten Transmitter über drei feste Antennen ein niedrigfrequentes Feld erzeugt, das von einem Receiver an der Arbeitsmaschine gemessen wird. Hier können dann die Position und Orientierung der Kopplungspunkte des Gerätes algorithmisch bestimmt, und dem Steuerungsgerät übermittelt werden. ,

Als Alternative zu magnetischen Sensoren können Ultraschall-Sensoren verwendet werden. Ultraschall Sensoren bestehen aus drei Komponenten: einem Transmitter, einem Receiver und einer elektronischen Einheit. Der Transmitter besteht aus drei Ultraschallgebern, die dreiecksförmig an dem Gerät angebracht sind. Korrespondierend dazu ist ein kleines Dreieck von Ultraschallmikrophonen auf der Arbeitsmaschine angebracht. In dem Steuerungsgerät werden die Daten der Mikrophone in Koordinaten der Kopplungspunkte konvertiert und an die Hexapodsteuerung übermittelt. Da es sich hier um Schallwellen handelt, ist dieses System anfällig gegenüber fremden Schallquellen. Über das Multiplexen mehrerer Transmitter kann das Problem der direkten Verbindung zwischen Transmitter und Receiver auf Kosten der Updaterate gelöst werden. Die Ultaschalllösungen bieten billige und ausreichend gute Alternativen zu magnetischen Sensoren.

Eine weitere Sensoreinrichtung für die Erkennung der räumlichen Lage der geräteseitigen Koppelpunkte bedient sich Laser-Sensoren, wie sie beispielsweise bei der automatischen Lenkung für Mähdrescher für die Erkennung der Bestandskante eingesetzt werden ("Die Augen des Mähdreschers", Profi 12 (1999), S. 48-49). Eine derartige Sensoreinrichtung besteht beispielsweise aus zwei Laser-Sensoren, einem Sender und einem Empfänger, die im Kabinendachbereich des Arbeitsfahrzeuges montiert werden und sich um einen festen Winkelbereich von einigen Grad hin und her verschwenken lassen. Aus dem Schwenkwinkel und dem Abstand zum Gerät ergibt sich der abgetastete Bereich. Der Sensor strahlt Infrarot-Laserstrahlen mit beispielsweise 60 MHz Pulsfrequenz ab. Der Empfänger erfasst die von charakteristischen Bereichen, wie Rahmenteilen und dergleichen reflektierten Strahlen. Aus den Reflexionsdaten berechnet ein Prozessor die Lage des charakteristischen Bereichs und leitet hieraus die Lage der Kupplungspunkte ab.

Für die Ermittlung der Lage des Gerätekopplungsrahmens muss der Scan-Vorgang räumlich durchgeführt werden. Das bedeutet, dass der Sender und der Empfänger des Laser-Sensors nicht nur in einer Ebene, sondern in zwei zueinander senkrechten Ebenen bewegt werden sollte. Es können auch mehrere Laser-Sensoren, die jeweils aus einem Sender und einem Empfänger bestehen, eingesetzt werden. Dabei werden die Sender und Empfänger jedes Laser-Sensors in einer eigenen zugehörigen horizontalen Ebene bewegt. Die horizontalen Ebenen aller Laser-Sensoren sind voneinander in vertikaler Richtung um vorgegebene Werte versetzt. Somit wird aus den Daten aller Laser-Sensoren ein räumliches Bild des gescannten Raums erstellt. Die Sensoren sollen dabei so auf der Arbeitsmaschine plaziert werden, dass die Geräteschnittstelle, insbesondere der Hexapod, nicht in dem Scan-Bereich liegt, so dass die Messwerte der Laser-Sensoren bei ihrer Bewegung nicht oder nur geringfügig beeinflusst werden. Um dies zu erreichen können beispielsweise Laser-Sensoren in das Hexapod integriert werden, indem sie z.B. in der Nähe des Kopplungsrahmens bzw. auf diesem montiert werden.

Des weiteren kann die Lage der geräteseitigen Koppelelemente bzw. Kopplungspunkten und ihre relative Zuordnung zu den fahrzeugseitigen Koppelelementen bzw. Kopplungspunkten unter Verwendung der GPS-Technik (Global Positioning System) bestimmt werden, indem entsprechende GPS-Empfänger auf dem Arbeitsfahrzeug und dem zu koppelnden Gerät montiert werden und die GPS-Signale entsprechend ausgewertet werden. Zur Bestimmung der räumlichen Ausrichtung der Koppelelemente können beispielsweise sowohl auf dem Arbeitsfahrzeug als auch auf dem Gerät je drei GPS-Systeme montiert werden.

Es sind auch weitere Messsysteme zur Bestimmung der relativen räumlichen Lage der fahrzeugseitigen und der geräteseitigen Koppelelemente verwendbar. Beispielsweise können Radarsender verwendet werden, welche die Reflexionssignale von Reflektoren empfangen und auswerten, die auf dem zu koppelnden Gerät montiert sind.

Gemäß einer zweckmäßigen Weiterbildung der Erfindung ist ein durch eine Bedienungsperson betätigbares Bedienungselement vorgesehen, das der Aktivierung des automatischen Koppelvorgangs dient. Vor der Auslösung des automatischen Koppelvorganges prüft die Bedienungsperson, ob der Kopplungsbereich hindernisfrei ist. Vorzugsweise kann die Bedienungsperson das Bedienungselement auch verwenden, um jederzeit den automatischen Koppelvorgang abzubrechen.

Der Koppelvorgang sollte aus Sicherheitsgründen nur bei stehender Arbeitsmaschine und bei stehendem Gerät durchgeführt werden. Es ist daher zweckmäßig, dass die Steuereinrichtung eine Abschaltfunktion enthält, die Relativbewegungen zwischen dem Arbeitsfahrzeug und dem zu koppelnden Gerät wahrnimmt und die bei Überschreiten eines vorgebbaren Relativbewegungswertes den automatischen Koppelvorgang abbricht. Beispielsweise wird während eines automatischen Koppelvorganges, d. h. während der automatischen Annäherung, die Ist-Lage der geräteseitigen Kopplungspunkte periodisch in vorgebbaren Zeitintervallen gemessen. Diese Werte werden mit der berechneten Soll-Lage für die Bewegungsbahn verglichen. Übersteigt die Abweichung zwischen Ist-Lage und Soll-Lage einen vorgebbaren Wert, so ist dies ein Indiz dafür, dass sich die Lage der geräteseitigen Kopplungspunkte relativ zur Position der Arbeitsmaschine geändert hat, was bedeuten kann, das sich die Arbeitsmaschine und/oder das Gerät relativ zum Boden bewegt. Der automatische Koppelvorgang wird dann abgebrochen und lässt sich durch einen durch die Bedienungsperson ausgelösten Aktivierungsbefehl wieder in Gang setzen, wobei die Lage der geräteseitigen Kopplungspunkte erneut zur Steuereinrichtung übertragen werden, die eine neue Bewegungsbahn berechnet. Bei kleinen Abweichungen zwischen der Ist-Lage und der Soll-Lage wird der Koppelvorgang nicht abgebrochen.

Häufig erfolgt das Ankoppeln nicht lediglich durch eine geradlinige Annäherung zwischen den fahrzeugseitigen Koppelpunkten an die geräteseitigen Koppelpunkte. Werden beispielsweise Koppelhaken verwendet, so muss im letzten Abschnitt der Annäherung ein Einhängen erfolgen, was z. B. einen vertikalen Verlauf der Bewegungsbahn erfordern kann.

Dieser letzte Abschnitt lässt sich jedoch nicht auf einfache Weise aufgrund der gemessenen Lagen der Koppelelemente durch die Steuereinrichtung berechnen. Eine bevorzugte Weiterbildung der Erfindung sieht daher vor, dass wenigstens ein Abschnitt der Bewegungsbahn in der Steuereinrichtung vorprogrammiert ist. Dabei sollen Parameter für die Bewegungsbahn durch die Steuerung vorgegeben werden. Diese Parameter werden aus dem Kopplungsvorgang und den Geometriedaten des jeweiligen Koppelsystems abgeleitet.

Der vorprogrammierte Abschnitt der Bewegungsbahn hängt von der Art des jeweiligen Kopplungsmechanismus ab. Zur Kopplung unterschiedlicher Anbaugeräte können mehrere, auf die jeweiligen Anbaugeräte abgestimmte Bewegungsbahnabschnitte vorprogrammiert und dann durch eine geeignete Eingabevorrichtung durch die Bedienungsperson ausgewählt werden. Soll beispielsweise eine Kopplung nach Art eines sogenannten Weiste-Dreiecks (DE-AS-1 215 419) erfolgen, wird zunächst durch eine automatische Annäherung längs der berechneten Bewegungsbahn das fahrzeugseitige Weiste-Dreieck in die Nähe des geräteseitigen Fangdreiecks gebracht und zu diesem parallel ausgerichtet. Mit Erreichen einer definierten Relativlage erfolgt die Steuerung anhand der vorprogrammierten Bewegungsbahn. Dabei wird das Weiste-Dreieck parallel zum Fangdreieck geführt bis es sich unter dem Fangdreieck befindet und kopplungsbereit ist. In einem letzten vorprogrammierten Bewegungsabschnitt wird das Weiste-Dreieck nach oben in das Fangdreieck eingeschoben, wobei die beiden Dreiecke miteinander arretiert werden. Die einzelnen Abschnitte der Bewegungsbahn können gerade Linien sein. Gegebenenfalls müssen jedoch Hindernisse berücksichtigt werden.

Die Programmierung der vorprogrammierten Bewegungsbahn kann schwierig sein. Eine vorteilhafte Ausgestaltung der Erfindung sieht einen Lernmodus zum Erlernen des Verlaufs dieser Bewegungsbahn vor. Zur Durchführung des Lernmodus steuert die Bedienungsperson zunächst den fahrzeugseitigen Koppelrahmen durch Betätigung von entsprechenden Stellelementen so an, dass der fahrzeugseitige Koppelrahmen eine Ausgangslage in der Nähe des geräteseitigen Koppelrahmens einnimmt. Dann aktiviert die Bedienungsperson einen Lernmodus, setzt den Koppelvorgang von Hand fort, beendet diesen und erzeugt schließlich ein Endsignal, um der Steuereinrichtung das Ende des Lernmodus anzuzeigen. Während des Lernmodus zeichnet die Steuereinrichtung die Bewegungsparameter des fahrzeugseitigen Koppelrahmens auf. Beim späteren Ausführen des automatischen Koppelvorgangs, wird die im Lernmodus erlernte Bewegung durch die Steuereinrichtung nachgebildet.

Werden während des automatischen Koppelvorgangs Hindernisse durch die Sensor- und Auswerteeinrichtung erkannt, wird der Koppelvorgang automatisch abgebrochen. Er kann durch ein von der Bedienungsperson ausgelöstes Startsignal wieder fortgesetzt werden.

Anhand der Zeichnung, die Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die Seitenansicht eines Ackerschleppers und eines Pflugs, die durch eine Anbauschnittstelle miteinander koppelbar sind und eine optische Sensoreinrichtung zur Automatisierung des Koppelvorgangs enthalten,
- Fig. 2: die perspektivische Prinzipskizze der in Fig. 1 dargestellten Anbauschnittstelle in Richtung Fahrzeugheck gesehen,
- Fig. 3: das Blockdiagramm einer erfindungsgemäßen Steuervorrichtung zum Koppeln eines Gerätes an ein Arbeitsfahrzeug,
- Fig. 4: einen Hexapodanbau mit magnetischen bzw. akustischen Sensoreinrichtungen und
- Fig. 5: eine der Fig. 1 entsprechende Darstellung, bei der anstelle einer optischen Sensoreinrichtung Laser-Sensoren verwendet werden.

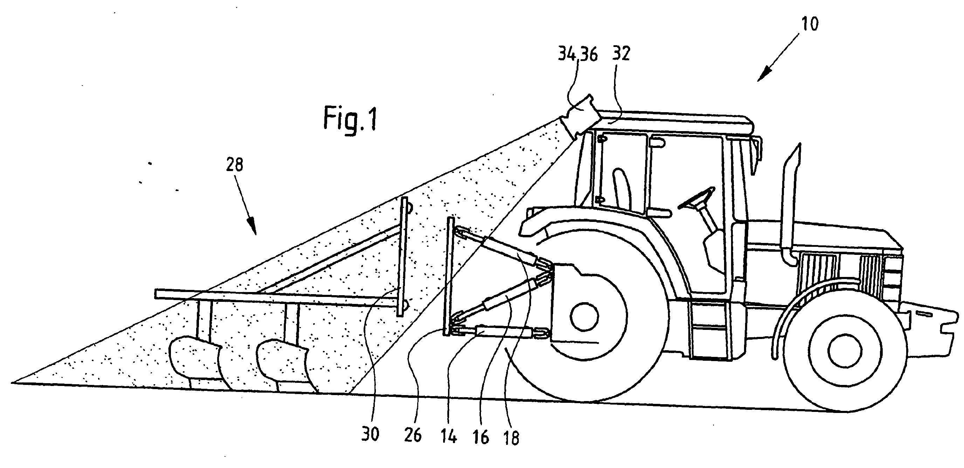

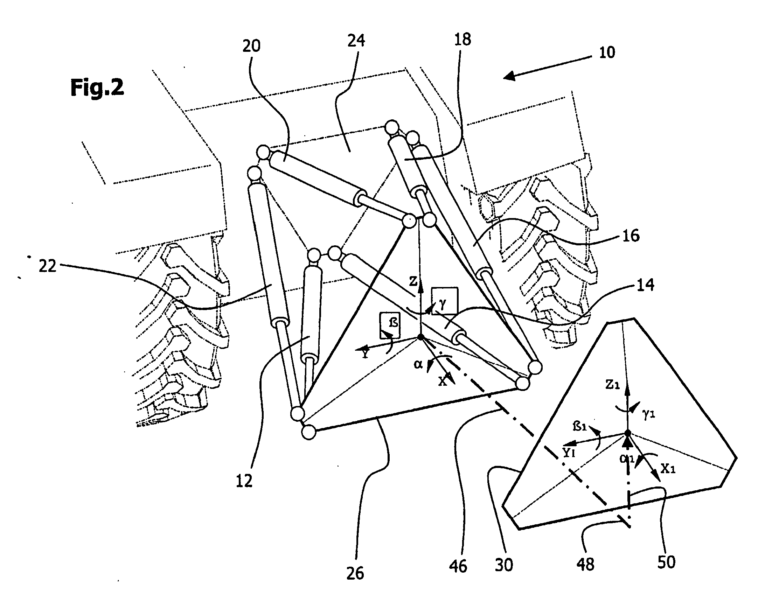

Aus den Figuren 1 und 2 geht ein Ackerschlepper 10 mit einer Anbauschnittstelle hervor, die sechs nach Art eines Hexapoden angeordnete Hydraulikzylinder 12, 14, 16, 18, 20, 22 enthält, die einenends im Heckbereich 24 des Arbeitsfahrzeugs 10 und anderenends an den Eckpunkten eines fahrzeugseitigen Koppeldreiecks 26 gelenkig befestigt sind. Einzelheiten einer derartigen Anbauschnittstelle sind in der nachveröffentlichten DE-A-199 51 840 näher beschrieben. Hinter dem Ackerschlepper 10 befindet sich ein Arbeitsgerät, nämlich ein Pflug 28, an dem ein geräteseitiges Koppeldreieck 30 befestigt ist. Das geräteseitige Koppeldreieck 30 lässt sich auf übliche Weise mit dem fahrzeugseitigen Kopplungsdreieck 26, beispielsweise nach Art eines Weiste-Dreiecks koppeln. Zur Kopplung können auch in den Eckpunkten des fahrzeugseitigen Koppeldreiecks 26 nicht dargestellte, nach hinten vorstehende und nach oben offene Fanghaken verwendet werden, die zum Koppeln in entsprechende, an dem geräteseitigen Koppeldreieck 30 angebrachte Aufnahmen eingreifen. Bei den Fanghaken und Aufnahmen handelt es sich um die oben erwähnten Koppelelemente oder Koppelpunkte.

In den seitlichen Eckpunkten des Fahrzeugkabinendachs 32 sind zwei Kameras 34, 36 befestigt, von denen in Fig. 1 nur eine sichtbar ist und die auf die Anbauschnittstelle, insbesondere auf das geräteseitige Koppeldreieck 30 ausgerichtet sind und den Koppelbereich überwachen.

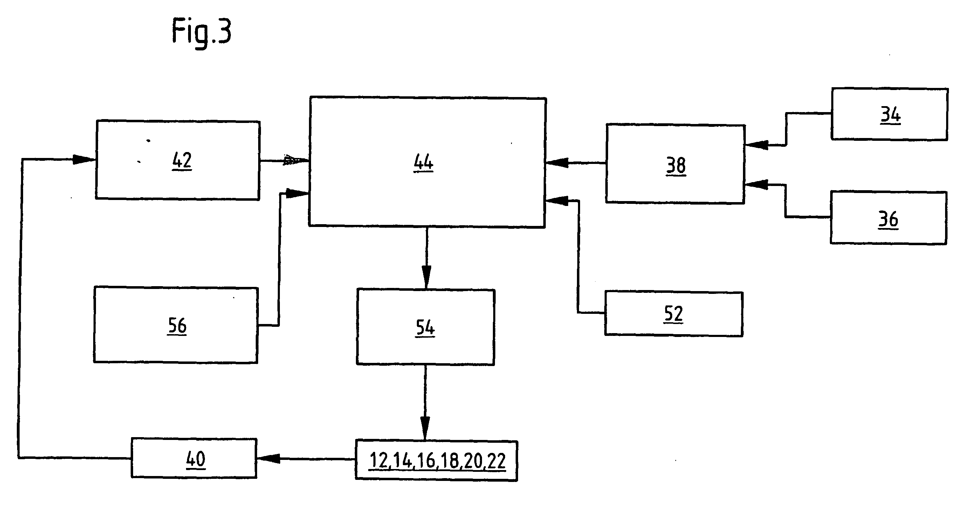

Wie aus Fig. 3 hervorgeht, werden die Signale der beiden Kameras 34, 36 durch eine elektronische Bildverarbeitungseinrichtung 38 ausgewertet. Die Bildverarbeitungseinrichtung 38 analysiert die Bilder der beiden Kameras 34, 36 hinsichtlich charakteristischer Bildelemente und bestimmt unter Verwendung bekannter Bildverarbeitungsmethoden die räumlichen Koordinaten X1, Y1, Z1, α1, β1, und γ1 des geräteseitigen Koppeldreiecks 30 in Bezug auf die Lage des Fahrzeugrumpfs.

In den Hydraulikzylindern 12, 14, 16, 18, 20, 22 des Hexapods sind nicht näher dargestellte Wegsensoren 40 integriert, deren Ausgangssignale dem jeweiligen Hub der Hydraulikzylinder 12, 14, 16, 18, 20, 22 entspricht. Aus den Wegsensorsignalen berechnet eine elektronische Hexapod-Recheneinheit 42 die räumlichen Koordinaten X, Y, Z, α, β, γ des fahrzeugseitigen Koppeldreiecks bzw. der fahrzeugseitigen Koppelpunkte in Bezug auf die Lage des Fahrzeugrumpfs.

Die von der Bildverarbeitungseinheit 38 und von der Hexapod-Recheneinheit 42 berechneten Koordinaten werden einer Steuereinrichtung 44 mitgeteilt, welche aus diesen Koordinaten den ersten Abschnitt 46 einer Bewegungsbahn berechnet. Es handelt sich bei dem ersten Abschnitt 46 der Bewegungsbahn um eine gerade Linie, welche die Anfangskoordinaten X, Y, Z, α, β, und γ, des fahrzeugseitigen Koppelrahmens mit den Koordinaten eines Zielpunktes 48, der in einer festen räumlichen Relation zum geräteseitigen Koppelrahmen 30 steht, verbindet. Der geradlinigen Bewegungsbahn können Koordinatendrehungen überlagert sein. In der Steuereinheit 44 ist eine zweite feste Bewegungsbahn 50 gespeichert, die durch einen Lernmodus ermittelt worden ist und die von der Art des konkreten Koppelmechanismus abhängt.

Die Steuereinrichtung 44 steht mit einem durch eine Bedienungsperson betätigbaren Aktivierungsschalter 52 in Verbindung. Wird durch den Aktivierungsschalter 52 ein Aktivierungssignal abgegeben, so berechnet die Steuereinheit 44 aus der ersten und der zweiten Bewegungsbahn 46, 50 Steuersignale für Proportionalventile 54, welche entsprechende Ölmengen an die jeweiligen Hydraulikzylinder 12, 14, 16, 18, 20, 22 liefern, so dass diese aus- bzw. eingefahren werden, um den fahrzeugseitigen Koppelrahmen 26 längs der Bewegungsbahnen 46, 50 zu bewegen und automatisch an den geräteseitigen Koppelrahmen 30 anzunähern und den Koppelvorgang auszuführen. Es ist des weiteren eine durch die Bedienungsperson betätigbare Bedienungseinheit 56, beispielsweise ein Joystick, vorgesehen, die mit der Steuereinrichtung 44 in Verbindung steht und der manuellen Bedienung der Anbauschnittstelle dient.

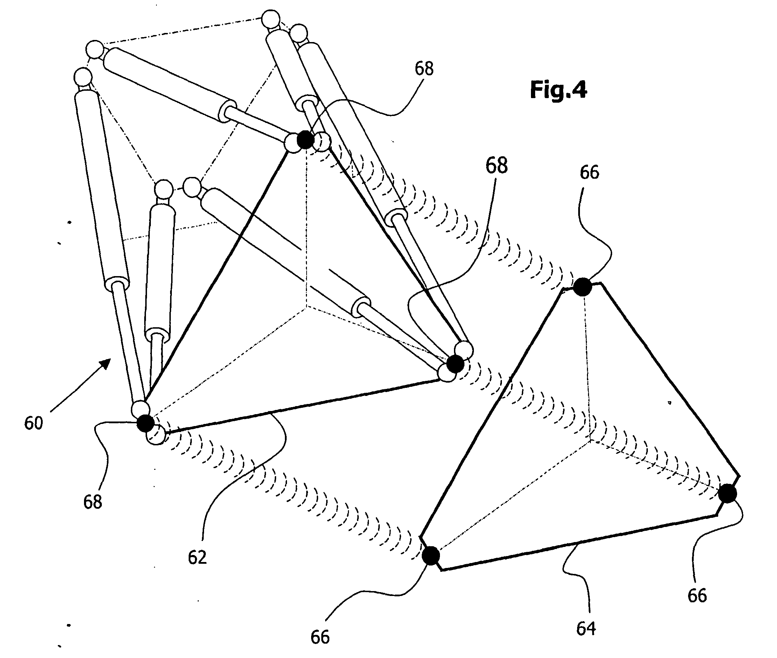

Anstelle einer Bildverarbeitung, wie sie aus den Figuren 1 und 3 hervorgeht, können auch andere Sensoreinrichtungen zur Erkennung der räumlichen Lage der geräteseitigen Koppelpunkte verwendet werden. In Fig. 4 ist beispielsweise eine an einem nicht näher gezeigten Arbeitsfahrzeug montierte Hexapod-Anordnung 60 mit einem fahrzeugseitigen dreieckförmigen Koppelrahmen 62 sowie eine geräteseitiger dreieckförmiger Koppelrahmen 64 angedeutet. In den Eckpunkten des geräteseitigen Koppelrahmens 64 ist je ein magnetischer Transmitter 66 angeordnet, deren Magnetfelder durch auf dem fahrzeugseitigen Koppelrahmen 62 angeordnete Receiver 68 empfangen werden. Aus den empfangenen Signalen lässt sich die relative Lage des geräteseitigen Koppelrahmens eindeutig bestimmen, so dass sich auch hier eine Bewegungsbahn berechnen lässt, die zum Koppeln automatisch nachgefahren wird. Anstelle der magnetischen Transmitter und Receiver können auch Ultraschallsender und -empfänger eingesetzt werden.

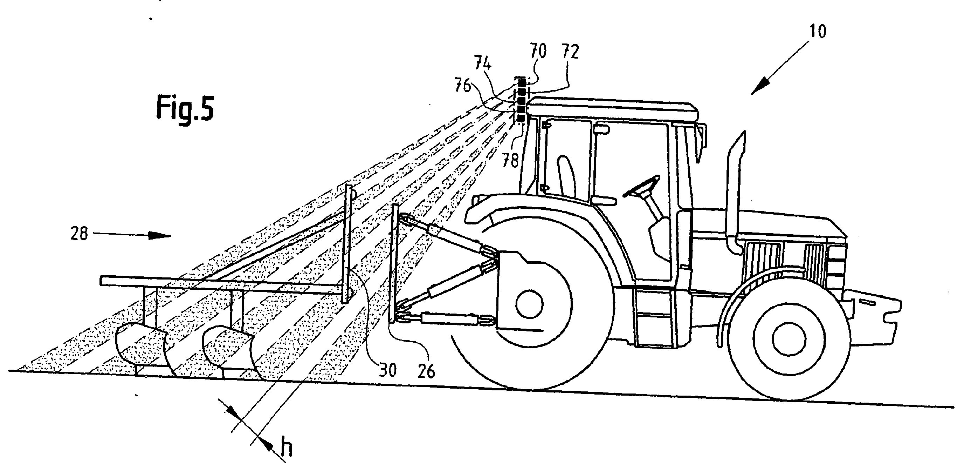

In dem in Fig. 5 dargestellten Ausführungsbeispiel werden zur Abtastung des Kopplungsbereichs anstelle den in Fig. 1 dargestellten optischen Kameras fünf Laser-Sensoren 70, 72, 74, 76, 78 verwendet, die jeweils aus einem Sender und einem Empfänger bestehen. Die Laser-Sensoren lassen sich seitlich verschwenken. Sie sind so angeordnet, dass jeder Laser-Sensor auf eine zugehörige vertikale Ebene ausgerichtet ist. Die horizontalen Ebenen der Laser-Sensoren sind voneinander um vorgegebene Werte mit einem Abstand h versetzt. Aus den gescannten Daten der Laser-Sensoren lässt sich ein räumliches Bild des Anbauraumes erstellen. Markante Elemente des Gerätes 28 bzw. des Koppeldreiecks 30 werden durch die Auswerteeinrichtung erkannt, so dass sich hieraus gerätebezogene Koordinaten berechnen lassen. Die Auswertung der Daten und Ansteuerung des Hexapoden kann auf ähnliche Weise erfolgen, wie es anhand der optischen Bildverarbeitung beschrieben wurde.

Auch wenn die Erfindung lediglich anhand einiger Ausführungsbeispiele beschrieben wurde, erschließen sich für den Fachmann im Lichte der vorstehenden Beschreibung sowie der Zeichnung viele verschiedenartige Alternativen, Modifikationen und Varianten, die unter die Ansprüche fallen.

## Patentansprüche

1. Vorrichtung zum Koppeln eines Gerätes (28) an ein Arbeitsfahrzeug (10), insbesondere einem landwirtschaftlichen oder industriellen Fahrzeug, mit einer Geräteschnittstelle, die fahrzeugseitige Koppelelemente (26) und korrespondierende geräteseitige Koppelelemente (30) aufweist, wobei Einstellmittel (12, 14, 16, 18, 20, 22) vorgesehen sind, durch die sich die Lagen der fahrzeugseitigen Koppelelemente (26) relativ zum Arbeitsfahrzeug (10) einstellen lassen, **gekennzeichnet durch** wenigstens eine Sensoreinrichtung (34, 36, 68, 70, 72, 74, 76, 78), welche die Lage der geräteseitigen Koppelelemente (30) erkennt, eine Auswerteeinrichtung, welche die relative Lage der geräteseitigen Koppelelemente zu den fahrzeugseitigen Koppelelementen ermittelt, und eine Steuereinrichtung, die eine Bewegungsbahn (46) für den Kopplungsvorgang berechnet und aufgrund eines Startsignals die Einstellmittel (12, 14, 16, 18, 20, 22) ansteuert, um den Kopplungsvorgang entlang der Bewegungsbahn (46, 50) automatisch durchzuführen.

2. Koppelvorrichtung nach Anspruch 1, **dadurch gekennzeichnet, dass** die fahrzeugseitigen Koppelelemente auf einem Kopplungsrahmen (26) angeordnet sind, der durch längenveränderliche Einstellmittel (12, 14, 16, 18, 20, 22) mit dem Arbeitsfahrzeug (10) in Verbindung steht.

3. Koppelvorrichtung nach Anspruch 2, **dadurch gekennzeichnet, dass** wenigstens sechs längenverstellbare Einstellmittel (12, 14, 16, 18, 20, 22) vorgesehen sind, deren jeweils erstes Ende gelenkig mit dem Arbeitsfahrzeug (10) verbunden ist und deren jeweils zweites Ende gelenkig mit einem Kopplungsrahmen (26), auf dem die Kopplungselemente angeordnet sind, in Verbindung steht und dass die Einstellmittel (12, 14, 16, 18, 20, 22) in geschlossenen kinematischen Ketten angeordnet sind und die Bewegung des Kopplungsrahmens (26) in sechs Freiheitsgraden ermöglichen.

4. Koppelvorrichtung nach einem der Ansprüche 1 bis 3, **dadurch gekennzeichnet, dass** die Einstellmittel (12, 14, 16, 18, 20, 22) nach Art eines Hexapoden angeordnet sind.

5. Koppelvorrichtung nach Anspruch 3 oder 4, **dadurch gekennzeichnet, dass** Sensoren zur Längenmessung der längenverstellbaren Einstellmittel (12, 14, 16, 18, 20, 22) vorgesehen sind und dass die Koordinaten der Koppelpunkte des Hexapod-Anbaus aus den Messwerten der Sensoren berechnet werden.

6. Koppelvorrichtung nach einem der Ansprüche 1 bis 5, **dadurch gekennzeichnet, dass** die Sensoreinrichtung wenigstens eine, vorzugsweise zwei, auf dem Arbeitsfahrzeug (10) montierte und auf die geräteseitigen Koppelelemente ausgerichtete Kameras (34, 36) und eine Bildverarbeitung (38) enthält.

7. Koppelvorrichtung nach einem der Ansprüche 1 bis 6, **dadurch gekennzeichnet, dass** die Sensoreinrichtung magnetische Sensoren (66, 68), Ultraschall-Sensoren (66, 68), Laser-Sensoren (70, 72, 74, 76, 78), Radar-Sensoren und/oder GPS-Sensoren enthält.

8. Koppelvorrichtung nach einem der Ansprüche 1 bis 7, **dadurch gekennzeichnet, dass** wenigstens ein durch eine Bedienungsperson betätigbares Bedienungselement (52) vorgesehen, ist, das der Aktivierung des automatischen Koppelvorgangs dient.

9. Koppelvorrichtung nach einem der Ansprüche 1 bis 8, **dadurch gekennzeichnet, dass** die Steuereinrichtung eine Abschaltfunktion enthält, die Relativbewegungen zwischen den fahrzeugseitigen Koppelelementen (26) und den geräteseitigen Koppelelementen (30) wahrnimmt und die bei Überschreiten eines vorgebbaren Relativbewegungswertes den automatischen Koppelvorgang abbricht.

10. Koppelvorrichtung nach einem der Ansprüche 1 bis 9,
**dadurch gekennzeichnet, dass** wenigstens ein Abschnitt der Bewegungsbahn (50) in der Steuereinrichtung vorprogrammiert ist.

11. Koppelvorrichtung nach Anspruch 10, **dadurch gekennzeichnet, dass** der Verlauf des vorprogrammierten Bewegungsbahn-Abschnitts (50) durch Ausführung eines Lernmodus eingebbar ist.

## Claims

1. A device for coupling an implement (28) to a working vehicle (10), especially an agricultural or industrial vehicle, with an implement interface which comprises coupling elements (26) on the vehicle side and corresponding coupling elements (30) on the implement side, wherein adjusting means (12, 14, 16, 18, 20, 22) are provided, through which the positions of the coupling elements (26) on the vehicle side can be adjusted relative to the working vehicle (10), **characterized by** at least one sensor device (34, 36, 68, 70, 72, 74, 76, 78) which detects the position of the coupling elements (30) on the implement side, an evaluating device which determines the position of the coupling elements on the implement side relative to the coupling elements on the vehicle side, and a control device which calculates a path of movement (46) for the coupling operation and controls the adjusting means (12, 14, 16, 18, 20, 22) in response to a start signal, in order to perform the coupling operation automatically along the path of movement (46, 50).

2. A coupling device according to claim 1, **characterized in that** the coupling elements on the vehicle side are arranged on a coupling frame (26) which is connected to the working vehicle (10) through adjusting means (12, 14, 16, 18, 20, 22) of variable length.

3. A coupling device according to claim 2, **characterized in that** at least six adjusting means (12, 14, 16, 18, 20, 22) of variable length are provided, first ends of which are each articulated to the working vehicle (10) and the second ends of which are each articulated to a coupling frame (26) on which the coupling elements are disposed, and **in that** the adjusting means (12, 14, 16, 18, 20, 22) are arranged in closed kinematic chains and enable movement of the coupling frame (26) in six degrees of freedom.

4. A coupling device according to any of claims 1 to 3, **characterized in that** the adjusting means (12, 14, 16, 18, 20, 22) are arranged in the manner of a hexapod.

5. A coupling device according to claim 3 or 4, **characterized in that** sensors for the length measurement of the adjusting means (12, 14, 16, 18, 20, 22) of variable length are provided and **in that** the coordinates of the coupling points of the hexapod structure are computed from the measured values of the sensors.

6. A coupling device according to any of claims 1 to 5, **characterized in that** the sensor device includes at least one and preferably two cameras (34, 36) mounted on the working vehicle (10) and directed on to the coupling elements on the implement side, and an image processor (38).

7. A coupling device according to any of claims 1 to 6, **characterized in that** the sensor devices include magnet sensors (66, 68), ultrasonic sensors (66, 68), laser sensors (70, 72, 74, 76, 78), radar sensor and/or GPS sensors.

8. A coupling device according to any of claims 1 to 7, **characterized in that** at least one operator element (52) operable by an operator is provided and serves to activate the automatic coupling operation.

9. A coupling device according to any of claims 1 to 8, **characterized in that** the control device has a turn off function, which detects relative movements between the coupling elements (26) on the vehicle side and the coupling elements (30) on the implement side and which aborts the automatic coupling operation on exceeding a predetermined relative movement value.

10. A coupling device according to any of claims 1 to 9, **characterized in that** at least one section of the path of movement (50) is pre-programmed in the control device.

11. A coupling device according to claim 10, **characterized in that** the course of the pre-programmed movement path section (50) can be entered by implementing a learning mode.

## Revendications

1. Dispositif de couplage d'une machine (28) à un véhicule de travail (10), en particulier un véhicule agricole ou industriel, comportant une interface machine, qui comporte des éléments de couplage (26) du côté véhicule et des éléments de couplage (30) correspondants du côté machine, des éléments de réglage (12, 14, 16, 18, 20, 22) étant prévus afin de pouvoir régler les positions des éléments de couplage (26) du côté véhicule par rapport au véhicule de travail (10), **caractérisé par** au moins un dispositif de détection (34, 36, 68, 70, 72, 74, 76, 78), qui détecte la position des éléments de couplage (30) du côté machine, un dispositif d'analyse qui détermine la position relative des éléments de couplage du côté machine par rapport aux éléments de couplage du côté véhicule, et un dispositif de commande qui calcule une trajectoire de mouvement (46) pour le processus de couplage et, sous l'effet d'un signal de départ, active les moyens de réglage (12, 14, 16, 18, 20, 22) pour exécuter automatiquement le processus de couplage suivant la trajectoire de mouvement (46, 50).

2. Dispositif de couplage selon la revendication 1, **caractérisé en ce que** les éléments de couplage du côté véhicule sont agencés sur un châssis de couplage (26), qui est relié au véhicule de travail (10) par des moyens de réglage (12, 14, 16, 18, 20, 22) réglables en longueur.

3. Dispositif de couplage selon la revendication 2, **caractérisé en ce qu'**il est prévu au moins six moyens de réglage (12, 14, 16, 18, 20, 22) réglables en longueur, dont la première extrémité de chacun d'entre eux est reliée de manière articulée au véhicule de travail (10) et dont la deuxième extrémité est reliée de manière articulée à un châssis de couplage (26), sur lequel sont agencés les éléments de couplage, et **en ce que** les moyens de réglage (12, 14, 16, 18, 20, 22) sont agencés dans une chaîne cinématique fermée et permettent le déplacement du châssis de couplage (26) dans six degrés de liberté.

4. Dispositif de couplage selon l'une quelconque des revendications 1 à 3, **caractérisé en ce que** les moyens de réglage (12, 14, 16, 18, 20, 22) sont agencés à la manière d'un hexapode.

5. Dispositif de couplage selon la revendication 3 ou 4, **caractérisé en ce qu'**il est prévu des capteurs destinés à mesurer la longueur des moyens de réglage (12, 14, 16, 18, 20, 22) réglables en longueur et **en ce que** les coordonnées des points de couplage du montage en hexapode sont calculées à partir des valeurs de mesure des capteurs.

6. Dispositif de couplage selon l'une quelconque des revendications 1 à 5, **caractérisé en ce que** le dispositif de détection comporte au moins une, de préférence deux caméras (34, 36), montées sur le véhicule de travail (10) et orientées vers les éléments de couplage du côté machine, et un dispositif de traitement des images (38).

7. Dispositif de couplage selon l'une quelconque des revendications 1 à 6, **caractérisé en ce que** le dispositif de détection comporte des capteurs magnétiques (66, 68), des capteurs à ultrasons (66, 68), des capteurs laser (70, 72, 74, 76, 78), des capteurs radar et/ou des capteurs GPS.

8. Dispositif de couplage selon l'une quelconque des revendications 1 à 7, **caractérisé en ce qu'**il est prévu au moins un élément de commande (52), qui peut être actionné par une personne de service et qui est destiné à activer le processus de couplage automatique.

9. Dispositif de couplage selon l'une quelconque des revendications 1 à 8, **caractérisé en ce que** le dispositif de commande comporte une fonction de désactivation, qui perçoit les mouvements relatifs entre les éléments de couplage (26) du côté véhicule et les éléments de couplage (30) du côté machine et qui interrompt le processus de couplage automatique en cas de dépassement d'une valeur prédéfinissable du mouvement relatif.

10. Dispositif de couplage selon l'une quelconque des revendications 1 à 9, **caractérisé en ce qu'**au moins un tronçon de la trajectoire de mouvement (50) est préprogrammé dans le dispositif de commande.

11. Dispositif de couplage selon la revendication 10, **caractérisé en ce que** le tracé du tronçon préprogrammé (50) de la trajectoire de mouvement peut être saisi moyennant l'exécution d'un mode adaptatif.
